# EUROPÄISCHE PATENTSCHRIFT

(11) **EP 2 865 619 B1**
(45) Veröffentlichungstag und Bekanntmachung des Hinweises auf die Patenterteilung: **30.12.2015**
(21) Anmeldenummer: 14003248.3
(22) Anmeldetag: 18.09.2014
(51) Int. Cl.: B65G 47/91

(54) **Sauggreifvorrichtung**
Vacuum gripper device
Système de pince aspirante

(30) Priorität: 23.10.2013 DE 102013017728
(43) Veröffentlichungstag der Anmeldung: 29.04.2015
(73) Patentinhaber: BEUMER GmbH & Co. KG, 59269 Beckum (DE)
(72) Erfinder: Heitplatz, Heino, 48317 Drensteinfurt (DE); Pölling, Ludger, 59329 Wadersloh-Diestedde (DE)
(74) Vertreter: Philipp, Matthias

(56) Entgegenhaltungen:
- DE-A1- 3 226 834
- DE-A1- 19 848 912
- DE-A1-102008 010 598
- DE-U1- 29 510 320
- DE-U1-202009 008 705

## Beschreibung

Die Erfindung betrifft eine Sauggreifvorrichtung mit einem Saugkopf, der mit einem elastischen Halteelement an einem Arbeitskopf einer Betätigungseinrichtung gehalten ist, wobei der Saugkopf einen elastischen Saugnapf aufweist, der einen Saugkörper und eine einen offenen Randbereich des Saugkörpers bildende, in einer Saugebene verlaufende Sauglippe besitzt.

Eine derartige Sauggreifvorrichtung, wie sie etwa aus DE 32 26 834 A1 bekannt ist, kann vorteilhaft zur Entladung von Stückgutteilen wie Paketen aus Wechselbehältern oder anderen Transporteinheiten eingesetzt werden.

Es sind Greifvorrichtungen bekannt, um Pakete teil- oder vollautomatisiert aus Wechselbehältern zu entladen, wobei allerdings der Nachteil besteht, dass die Pakete vorwiegend einzeln gegriffen und auf ein Förderband abgelegt werden. Es ist schwierig, schräg liegende Pakete zu erfassen.

Die Aufgabe der Erfindung besteht daher darin, eine Sauggreifvorrichtung zu schaffen, mit der auch schräg angeordnete Stückgutteile bzw. Pakete vorteilhaft gegriffen werden können und bei der auch schwere Stückgutteile sicher gehalten sind, ohne dass die Gefahr eines abschälenden Ablösens des Saugnapfs von der erfassten Oberfläche eines Stückgutteils besteht. Diese Aufgabe wird erfindungsgemäß durch eine Sauggreifvorrichtung mit einem Saugkopf gelöst, der mit mindestens einem elastischen Halteelement an einem Arbeitskopf einer Betätigungseinrichtung gehalten ist, wobei der Saugkopf einen elastischen Saugnapf aufweist, der einen Saugkörper und eine einen offenen Randbereich des Saugkörpers bildende, in einer Saugebene verlaufende Sauglippe besitzt, wobei erfindungsgemäß vorgesehen ist, dass der Saugkopf eine mit dem Saugkopf verbundene und diesen ringförmig umschließende Halteplatte aufweist, die eine ebene, in einer zu der Saugebene parallelen Kontaktebene verlaufende Kontaktfläche aufweist. Der Saugkörper weist einen innenliegenden Saugraum auf. Die Halteplatte ist bevorzugt starr ausgebildet. Die Saug- und Kontaktebenen verlaufen zweckmäßigerweise senkrecht zu einer Saugrichtung des Saugkopfs, die entlang einer Längsachse des Saugkopfs gerichtet ist. Die Kontaktfläche ist zweckmäßigerweise ringförmig und umschließt mit Abstand die Sauglippe, wobei vorteilhaft ein mit Umgebungsluft in Verbindung stehender Zwischenraum zwischen der Kontaktfläche und dem Saugnapf und der Sauglippe angeordnet ist.

In einem drucklosen Ruhezustand des Saugnapfs kann die Sauglippe, die ebenso wie der Saugnapf elastisch und bevorzugt einstückig damit ausgebildet ist, in der Kontaktebene liegen oder entgegen der Saugrichtung über diese vorstehen. In einem Saugzustand, wobei in dem Saugraum ein Unterdruck herrscht, kann der Saugnapf, beispielsweise bei Anlage einer Oberfläche eines Stückgutteils gegen die Sauglippe, mit einer in Saugrichtung wirkenden Rückzugskraft beaufschlagbar sein und die Sauglippe aufgrund der Elastizität des Saugkörpers in oder hinter die Kontaktebene bringbar sein.

Die Kontaktfläche steht nicht mit dem Saugraum des Saugnapfs in Verbindung und ist daher weder im Rück- noch im Saugzustand mit Unterdruck beaufschlagt, sondern stets mit einem Umgebungsdruck beaufschlagt.

Zweckmäßigerweise ist die Sauglippe kreisrund oder oval und weist die Halteplatte eine kreisförmige oder ovale Öffnung auf, deren Durchmesser oder Größe gleich oder größer als ein Außendurchmesser der Sauglippe oder deren Größe ist. Der Zwischenraum kann in diesem Fall ringförmig sein.

Bevorzugt ist der Saugkörper an einem der Sauglippe gegenüberliegenden Ende an einem Anschlussteil befestigt, das an der Halteplatte fixiert ist. An dem Anschlussteil kann eine flexible Saugleitung angeschlossen sein, die mit einer Saugeinrichtung verbunden ist. Das Anschlussteil ist bevorzugt zylindrisch, beispielsweise aus Kunststoff oder Metall, wobei der Saugkörper auf das Anschlussteil aufgeschoben und daran fixiert sein kann.

Die Halteplatte kann an dem Anschlussteil befestigt sein.

Obwohl ein Abstand zwischen der Saugebene und der Kontaktebene bevorzugt fest eingestellt ist, kann vorgesehen sein, dass die Halteplatte verstellbar an dem Anschlussteil angebracht ist, wobei der genannte Abstand veränderbar sein kann, auch im Betrieb der Saugvorrichtung.

Die Halteplatte besteht im Bereich der Kontaktfläche bevorzugt aus einem Material oder ist in diesem Bereich mit einem Material beschichtet, das einen hohen Reibwert aufweist, beispielsweise Gummi.

Der Saugkopf kann mit mehreren elastischen Halteelementen an dem Arbeitskopf der Betätigungseinrichtung gehalten sein, wobei ein erstes Ende eines jeden Halteelements mit dem Saugkopf und ein zweites Ende eines jeden Halteelements mit dem Arbeitskopf verbunden sind. Die Halteplatte kann bezogen auf eine Neutralstellung, in der keine äußeren Kräfte auf die Halteplatte oder den Saugkopf einwirken, abgesehen von deren Eigengewicht, um mindestens 10°, 20°, 30°, 45°, 60°, 90° oder 120° in jeder Richtung gegen eine elastische Rückstellkraft des mindestens einen Halteelements verschwenkbar sein.

Bevorzugt ist vorgesehen, dass die Halteelemente Spiralfedern sind, wobei insbesondere drei Halteelemente in Form von Spiralfedern vorgesehen sein können, deren erste Enden an Eckpunkten eines gleichseitigen Dreiecks an dem Saugkopf und deren zweite Enden an Eckpunkten eines gleichseitigen Dreiecks an dem Arbeitskopf angeordnet sind. Hierbei kann vorgesehen sein, dass die ersten Enden der Spiralfedern von dem Saugkopf in Saugrichtung gesehen divergierend abgehen. Weiterhin kann vorgesehen sein, dass die zweiten Enden der Spiralfedern von dem Arbeitskopf divergierend abgehen. Bei einer derartigen Anordnung von drei Spiralfedern verlaufen diese bevorzugt rotationssymmetrisch bezüglich einer Längsachse der Sauggreifvorrichtung, die mit der Längsachse des Saugkopfs übereinstimmt, wobei die einzelnen Spiralfedern um 120° in Umfangsrichtung bezüglich der Längsachse zueinander versetzt angeordnet sind.

Zweckmäßigerweise haben alle Spiralfedern eine gleiche Länge und eine gleiche Federkonstante, wobei allerdings unterschiedlich lange Spiralfedern und/oder Spiralfedern mit unterschiedlicher Federkonstante eingesetzt werden können, um zu erreichen, dass die Längsachse des Saugkopfs in einer Neutralstellung ohne Einwirkung äußerer Kräfte auf den Saugkopf horizontal ist. Damit wird eine unerwünschte Neigung der Saugebene abweichend von der Vertikalen im Ruhezustand ohne ein an dem Saugkopf gehaltenes Stückgutteil vermieden. Die Neutralstellung kann selbstverständlich eine beliebige vorgegebene Position der Saugebene sein, auch abweichend von einer Vertikalstellung, beispielsweise eine horizontale Ausrichtung der Saugebene.

Anstelle von drei Halteelementen können zwei, vier oder mehr Halteelemente vorgesehen sein, deren gegenseitiger Umfangswinkelabstand bezüglich der Längsachse des Saugkopfs bzw. der Sauggreifvorrichtung bevorzugt gleich groß ist.

Der Saugkopf kann durch ein nicht dehnbares Zugglied wie Kette oder Seil, insbesondere Stahlseil, mit der Betätigungseinrichtung verbunden sein. Dadurch wird eine übermäßige Dehnung des mindestens einen elastischen Halteelements vermieden.

Der Saugkörper des Saugnapfs kann abwechselnd konvergierend und divergierend angeordnete hohlkegelstumpfförmige Abschnitte aufweisen, die eine teleskopartige Längenänderung des Saugkörpers zulassen, und insbesondere bei Beaufschlagung mit Unterdruck und Anlage einer im Wesentlichen abdichtenden Fläche eines Stückgutteils gegen die Sauglippe eine teleskopartige Verkürzung des Saugkörpers im Vergleich zu einem drucklosen Ruhezustand ermöglichen.

Mehrere Saugköpfe können an einer gemeinsamen Betätigungseinrichtung angebracht sein, so dass eine gleichzeitige und gleichsinnige Betätigung aller Saugköpfe möglich ist. Bevorzugt sind die Längsachsen aller Saugköpfe in Neutralstellung parallel zueinander. Die Saugebenen aller Saugköpfe können in einer gemeinsamen Saugebene liegen, in Neutralstellung der Saugköpfe.

Obwohl die Betätigungseinrichtung eine Positionierung des Arbeitskopfs in einer, zwei oder drei zueinander senkrechten Raumrichtungen und/oder eine Verdrehung des Arbeitskopfs um eine, zwei oder drei zueinander senkrechte Drehachsen ermöglichen kann, ist eine derart aufwendige Positionierung des Saugkopfs in der Regel nicht notwendig, da aufgrund der elastischen Anbringung des Saugkopfs am Arbeitskopf eine selbsttätige Ausrichtung des Saugkopfs und der Sauglippe in Bezug auf ein zu ergreifendes Stückgutteil erfolgt. Es genügt daher in der Regel, wenn die Betätigungseinrichtung linear ein- und ausfahrbar ist, wobei sie in einer ausgewählten Ausfahrstellung feststellbar sein kann. Die Betätigungseinrichtung ist vorzugsweise als pneumatische oder hydraulische Kolben-/Zylindereinheit ausgebildet, einfachoder doppeltwirkend. Hierbei kann vorgesehen sein, dass die Kolben-/Zylindereinheit mit einem von einer Ausfahrstellung unabhängigen Druck beaufschlagbar ist. Alternativ kann die Betätigungseinrichtung eine mechanische Betätigungsfeder umfassen, etwa eine Spiralfeder.

Zweckmäßigerweise umfasst die Betätigungseinrichtung eine Linearführung, um Querkräfte wie etwa Gewichtskräfte eines angesaugten Stückgutteils aufnehmen zu können. Eine Betätigungsrichtung der Betätigungseinrichtung kann mit der Saugrichtung des Saugkopfs übereinstimmen oder parallel dazu sein, wenn sich der Saugkopf in einer Neutralstellung befindet.

Es kann vorgesehen sein, dass eine oder mehrere benachbarte weitere Sauggreifvorrichtungen mit jeweiligen Saugköpfen und Betätigungseinrichtungen vorgesehen sind, wobei alle Betätigungseinrichtungen an einem gemeinsamen Greiferrahmen angeordnet sein können. Der Greiferrahmen kann von einer Greiferhandhabungseinrichtung gesteuert positionierbar sein, und zwar in einer, zwei oder drei zueinander senkrechten Raumrichtungen verfahrbar und/oder um eine, zwei oder drei zueinander senkrechte Drehachsen verschwenkbar sein. Bevorzugt ist vorgesehen, dass der Greiferrahmen um eine horizontale Schwenkachse schwenkbar und entlang einer horizontalen, quer zu der Schwenkachse angeordneten Arbeitsrichtung verfahrbar ist. In diesem Fall sind die Betätigungseinrichtungen zweckmäßigerweise parallel zu der Arbeitsrichtung linear ein- und ausfahrbar ausgebildet.

Jeder Saugnapf einer Sauggreifvorrichtung kann einzeln oder alle Saugnäpfe können gleichzeitig mit Unterdruck beaufschlagt werden, oder mit einer Saugeinrichtung verbunden werden, wobei Zeitpunkt und Saugintensität jedes Saugnapfs individuell steuerbar sein kann.

Ein wesentliches Element der Erfindung liegt in der Anordnung der ringförmigen, den Saugnapf bzw. die Sauglippe umschließenden Halteplatte, die zum einen dazu dient, die Sauglippe parallel zu einer zu ergreifenden Stückgutoberfläche auszurichten, oder mit anderen Worten die Saugrichtung des Saugnapfs senkrecht zur (lokalen) Stückgutoberfläche auszurichten. Zum anderen dient die Halteplatte als Gegenlager für eine Stückgutoberfläche, wenn diese von dem Saugnapf angesaugt wird. Dadurch wird verhindert, dass die Sauglippe durch Querkräfte abschälend gelöst wird. Zudem wird eine Reibkraft an der Kontaktfläche der Halteplatte erzeugt. Weiterhin schützt die Kontaktplatte die empfindliche Sauglippe des Saugnapfs vor Beschädigungen.

Die Erfindung wird nachfolgend anhand von Ausführungsbeispielen beschrieben, wobei auf eine Zeichnung Bezug genommen wird, in der
Fig. 1 eine Seitenansicht einer erfindungsgemäßen Sauggreifvorrichtung zeigt,
Fig. 2 eine perspektivische Ansicht der Sauggreifvorrichtung nach Fig. 1 zeigt,
Fig. 3 eine perspektivische Ansicht der Sauggreifvorrichtung nach Fig. 1 aus einer anderen Blickrichtung zeigt,
Fig. 4 eine vergrößerte Schnittdarstellung der Sauggreifvorrichtung nach Fig. 1 im Bereich des Saugkopfs und des Arbeitskopfs der Betätigungseinrichtung zeigt, und
Fig. 5 eine perspektivische Ansicht von mehreren auf einem Greiferrahmen angeordneten Sauggreifvorrichtungen zeigt.

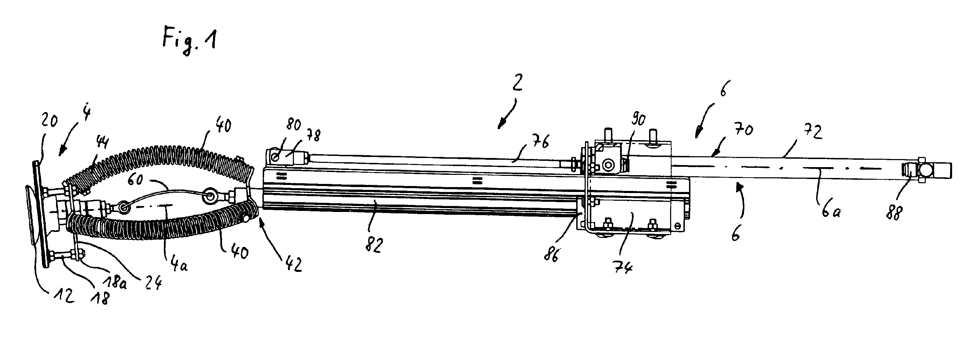

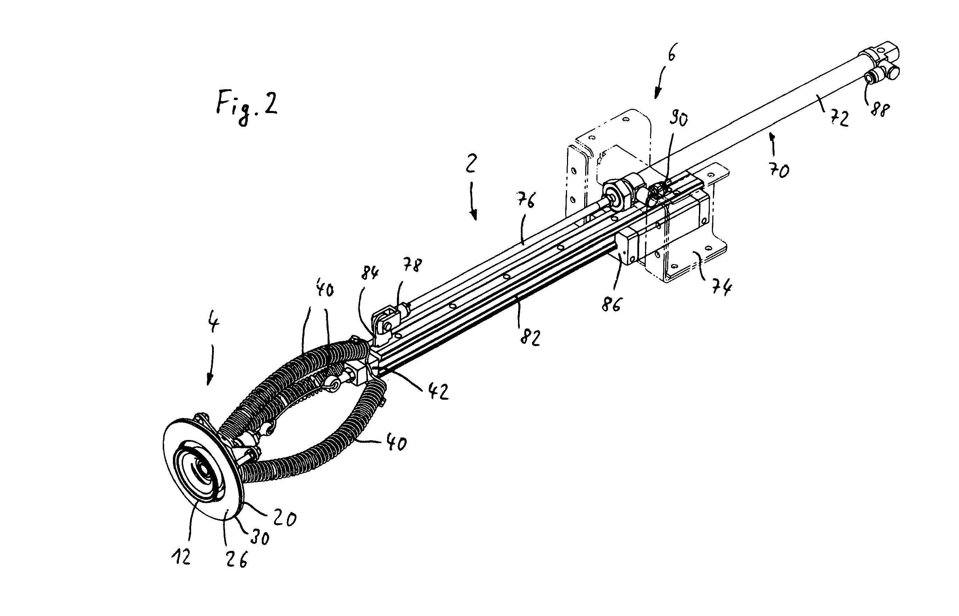

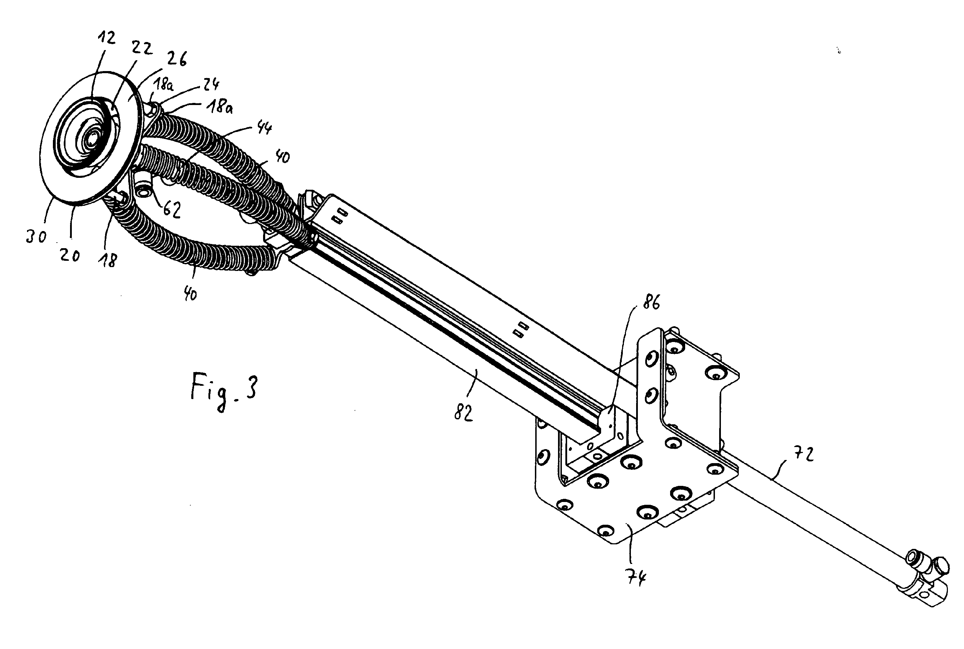

Fig. 1 bis 4 zeigen unterschiedliche Ansichten einer erfindungsgemäßen Sauggreifvorrichtung 2 mit einem Saugkopf 4, der an einer Betätigungseinrichtung 6 angebracht ist. Der Saugkopf 4 weist einen elastischen Saugnapf 8 mit einem Saugkörper 10 und einer einen offenen Randbereich des Saugkörpers 10 bildenden Sauglippe 12 auf. Die Sauglippe 12 erstreckt sich kreisförmig in einer Saugebene 14 und senkrecht zu einer Saugrichtung 15. Der Saugnapf 8 ist mit einem der Sauglippe 12 gegenüberliegenden Ende 10a des Saugkörpers 10 an einem zylindrischen Anschlussteil 16 gehalten. Das Anschlussteil 16 ist mit drei Befestigungselementen in Form von Stehbolzen 18 mit einer ringförmigen Halteplatte 20 verbunden, die den Saugnapf 8 ringförmig umgibt. Die Halteplatte 20 weist eine kreisförmige Öffnung 22 auf, die konzentrisch zu der ebenfalls kreisförmigen Sauglippe 12 angeordnet ist und deren Durchmesser zumindest ebenso groß wie ein Außendurchmesser der Sauglippe 12 ist. Die genannten Stehbolzen 18 sind fest mit der Halteplatte 20 verbunden und über ein ring- oder sternförmiges Verbindungsteil 24 mit dem Anschlussteil 16 verbunden.

Die Halteplatte 20 bildet auf ihrer der Betätigungseinrichtung 6 abgekehrten Seite eine Kontaktfläche 26, die sich in einer parallel zu der Saugebene 14 verlaufenden Kontaktebene 28 erstreckt. Im Bereich der Kontaktfläche 26 ist die Halteplatte 20 mit einer Gummibeschichtung 30 versehen, die an der Kontaktfläche 26 einen hohen Reibwert aufweist. Die Sauglippe 8, der Saugkörper 10, die Kontaktplatte 20 und das Anschlussteil 16 sind konzentrisch bezüglich einer zentralen Längsachse 4a des Saugkopfs 4 angeordnet.

Die Öffnung 22 bildet einen Zwischenraum zwischen der Halteplatte 20 und der Sauglippe 12 bzw. dem Saugnapf 8, der stets mit Umgebungsluft in Verbindung steht. Ein Unterdruck innerhalb des Saugnapfs kann sich somit nicht bis zu der Halteplatte 20 oder der Kontaktfläche 26 fortsetzen.

Die drei Stehbolzen 18 ermöglichen mittels verstellbarer Befestigungsmuttern 18a eine Justierung des Verbindungsteils 24 derart, dass die Kontaktebene 28 parallel zu der Saugebene 14 der Sauglippe 12 eingestellt werden kann, sowie eine Justierung eines gewünschten Abstands zwischen Saug- und Kontaktebene im unbelasteten, drucklosen Zustand.

Der Saugnapf 8 ist über einen Anschluss 62 mittels einer nicht dargestellten Saugleitung mit einer Unterdruckquelle gesteuert verbindbar, um bedarfsweise eine Saugströmung durch den Saugnapf 8 zu bewirken und bei Anlage der Sauglippe 12 gegen eine Oberfläche eines zu ergreifenden Stückgutteils einen Unterdruck in dem Saugnapf aufzubauen. Die Saugleitung kann mit dem Anschlussteil 16 verbunden sein, welches zu diesem Zweck innen hohl und mit dem Anschluss 62 versehen sein kann.

Alternativ besteht die Möglichkeit, dass der Saugnapf passiv wirkend ausgebildet ist, ohne Verbindung zu einer Unterdruckquelle, wobei beim Andrücken der Sauglippe gegen eine Oberfläche eines zu ergreifenden Stückgutteils Luft aus dem luftdicht ausgebildeten Saugnapf entweicht und bei Zurückziehen des Saugnapfs eine Saugwirkung entsteht.

Der Saugkopf 4 ist mit drei Halteelementen in Form von Spiralfedern 40 mit einem Arbeitskopf 42 der Betätigungseinrichtung 6 flexibel verbunden. Zu diesem Zweck sind an dem Saugkopf 4, insbesondere an dem zwischen der Halteplatte 20 und dem Anschlussteil 16 angeordneten Verbindungsteil 24, drei zylindrische oder leicht konusförmige Befestigungselemente 44 angeordnet, an denen jeweils ein Endabschnitt einer Spiralfeder 40 gehalten ist.

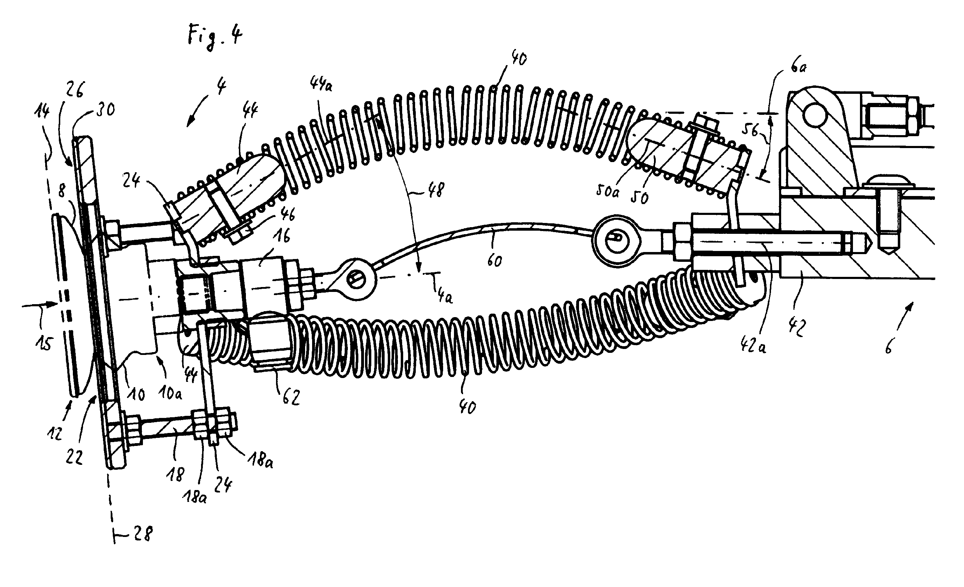

Fig. 4 zeigt zylindrische Befestigungselemente 44 mit jeweils einer Befestigungsschraube 46. Die Befestigungselemente 44 sind schräg bezüglich einer Längsachse 4a des Saugkopfs 4 angeordnet, und zwar in Saugrichtung 15 gesehen divergierend, so dass ein Winkel 48 zwischen einer Längsachse 44a eines Befestigungselements 44 und der Längsachse 4a des Saugkopfs 4 in einem Bereich von beispielsweise 10° bis 45°, insbesondere etwa 30° besteht. Die Befestigungselemente 44 sind in Umfangsrichtung um die Längsachse 4a gesehen zweckmäßigerweise mit gleichen Winkelabständen angeordnet, im vorliegenden Fall bei drei Spiralfedern mit einem Umfangswinkelabstand von 120°.

An dem Arbeitskopf 42 ist eine entsprechende Befestigung der Spiralfedern 40 vorgesehen. An dem Arbeitskopf 42 sind drei Befestigungselemente 50 angeordnet, deren Längsachsen 50a schräg bezüglich einer Längsachse 6a der Betätigungseinrichtung 6 positioniert sind. Die Längsachsen 50a weisen gleiche gegenseitige Umfangswinkelabstände bezüglich der Längsachse 6a auf, bei drei Spiralfedern 40 also Umfangswinkelabstände von 120°. Ein Winkel 56 zwischen einer Längsachse 50a eines Befestigungselements 50 und der Längsachse 6a der Betätigungseinrichtung 6 kann zwischen 10° und 45° liegen, und beträgt beispielhaft ca. 30°, wobei die Anordnung in Richtung auf den Saugkopf 4 gesehen divergierend ist.

Die drei Spiralfedern 40 können identisch, aber auch unterschiedlich sein. Beispielsweise können die Spiralfedern unterschiedliche Längen (im ungedehnten Zustand) aufweisen. Alternativ oder zusätzlich können die Spiralfedern eine unterschiedliche Federkonstante oder Federhärte aufweisen. Mit diesen Maßnahmen besteht die Möglichkeit, das Eigengewicht des Saugkopfs 4 dahingehend auszugleichen, dass im Ruhezustand ohne Belastung durch ein aufgenommenes Stückgutteil die Längsachse 4a des Saugkopfs parallel zu einer Betätigungseinrichtung oder Längsachse 6a der Betätigungseinrichtung verläuft, beispielsweise horizontal, ohne dass das Eigengewicht des Saugkopfs zu einer unerwünschten Neigung gegenüber der Horizontalen oder der Längsachse 6a führt.

Um zu vermeiden, dass die Spiralfedern 40 bei Aufnahme eines schweren Stückgutteils übermäßig gedehnt werden oder abknicken, ist zwischen dem Saugkopf 4 und dem Arbeitskopf 42 ein Mittel zum Begrenzen des Abstands zwischen Saugkopf 4 und Arbeitskopf 42 angeordnet, dass in dem dargestellten Ausführungsbeispiel durch ein undehnbares Zugglied 60 in Form eines Stahlseils gebildet ist. Da es in manchen Fällen erwünscht sein kann, auch die Winkelauslenkung des Saugkopfs 4 relativ zu der Betätigungseinrichtung 6 zu begrenzen, d.h. einen Winkel zwischen der Längsachse 4a des Saugkopfs 4 und einer Längsachse 42a des Arbeitskopfs 42, die parallel zu der Längsachse 6a der Betätigungseinrichtung 6 ist, kann entweder das Zugglied 60 dahingehend ausgebildet sein, dass es lediglich eine bestimmte maximale Winkelauslenkung zulässt, beispielsweise 90°, oder aber es kann ein zusätzliches Mittel zum Begrenzen des Winkels zwischen den Längsachsen 4a, 42a vorgesehen sein.

Die Betätigungseinrichtung 6 umfasst in der dargestellten Ausführungsform eine pneumatisch betätigte Kolben-/Zylindereinheit 70, mit einem Zylinder 72, der an einer Montageeinheit 74 gehalten ist, und einer durch den Zylinder 72 betätigten Kolbenstange 76. An einem vorderen Ende der Kolbenstange 76 ist ein Gabelkopf 78 gehalten, der mittels eines Befestigungsbolzens 80 mit einem mit einer Laufschiene 82 verbundenen Betätigungsansatz 84 gekoppelt ist. Die Laufschiene 84 bildet zusammen mit einer an der Montageeinheit 74 befestigten Führungsschiene 86 eine Linearführung, deren Verfahrrichtung mit der Längsachse 6a der Betätigungseinrichtung 6 und mit der Arbeitsrichtung der Kolben-/Zylindereinheit 70 übereinstimmt und somit auch eine Betätigungsrichtung der Betätigungseinrichtung 6 bildet.

Der Zylinder 72 ist doppelt wirkend ausgebildet, wobei eine Einleitung von Druckluft in einen ersten Anschluss 88 ein Ausfahren der Kolbenstange 76 und damit eine Bewegung von Arbeitskopf 42 und Saugkopf 4 im Wesentlichen entgegen der Saugrichtung 15 bewirkt, während ein Anlegen von Druckluft an einen zweiten Anschluss 90 eine Rückzugsbewegung der Kolbenstange 76 und damit eine Bewegung von Arbeitskopf 42 und Saugkopf 4 im Wesentlichen in Saugrichtung 15 bewirkt.

Während des Anfahrens der Saugnäpfe 8 oder Saugköpfe 4 an die zu erfassenden Stückgutteile werden die (bzw. wird die) Betätigungseinrichtungen vorteilhaft mit einem auf einen vorgegebenen Wert begrenzten Druck ausgefahren, um die Anpresskraft eines Saugnapfs oder Saugkopfs zu begrenzen und ein Abknicken der Spiralfedern bei zu großer Anpresskraft zu verhindern.

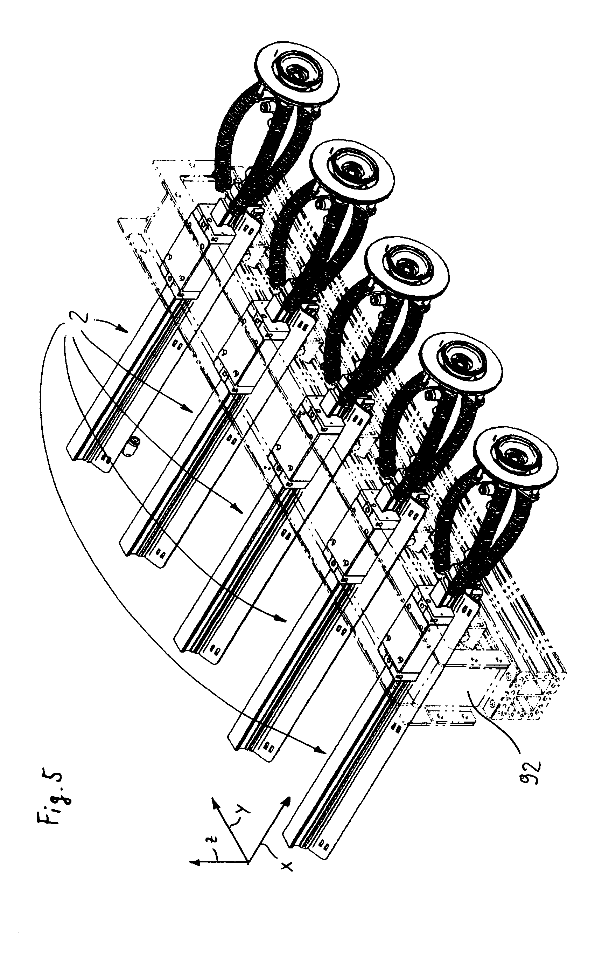

Fig. 5 erläutert eine Anordnung, bei der mehrere, in diesem Beispiel fünf Sauggreifvorrichtungen 2 mit jeweiligen Saugköpfen 4 und Betätigungseinrichtungen 6 auf einem Greiferrahmen 92 angeordnet sind. Der Greiferrahmen 92 kann an einer nicht dargestellten Handhabungseinrichtung gehalten und mit dieser gesteuert positionierbar sein, beispielsweise in einer, zwei oder drei zueinander senkrechten Raumrichtungen verfahrbar sein und/oder um eine, zwei oder drei zueinander senkrechte Drehachsen verschwenkbar sein. Die drei Bewegungsrichtungen sind in Fig. 5 mit x (parallel zur Betätigungsrichtung der Betätigungseinrichtungen 6 oder der Längsachsen 6a), y und z (vertikal) bezeichnet.

### Bezugszeichenliste

- 2: Sauggreifvorrichtung
- 4: Saugkopf
- 4a: Längsachse von 4
- 6: Betätigungseinrichtung
- 6a: Längsachse von 6
- 8: Saugnapf
- 10: Saugkörper
- 10a: Ende von 10
- 12: Sauglippe
- 14: Saugebene
- 15: Saugrichtung
- 16: Anschlussteil
- 18: Stehbolzen (Befestigungselement)
- 18a: Befestigungsmutter
- 20: Halteplatte
- 22: Öffnung
- 24: Verbindungsteil
- 26: Kontaktfläche
- 28: Kontaktebene
- 30: Gummibeschichtung
- 40: Spiralfeder (Halteelement)
- 42: Arbeitskopf
- 42a: Längsachse
- 44: Befestigungselement
- 44a: Längsachse
- 46: Befestigungsschraube
- 48: Winkel
- 50: Befestigungselement
- 50a: Längsachse von 50
- 56: Winkel
- 60: Zugglied
- 62: Anschluss
- 70: Kolben-/Zylindereinheit
- 72: Zylinder
- 74: Montageeinheit
- 76: Kolbenstange
- 78: Gabelkopf
- 80: Befestigungsbolzen
- 82: Laufschiene
- 84: Betätigungsansatz
- 86: Führungsschiene
- 88: erster Anschluss
- 90: zweiter Anschluss
- 92: Greiferrahmen

- x, y, z: Verfahrrichtungen

## Patentansprüche

1. Sauggreifvorrichtung (2) mit einem Saugkopf (4), der mit mindestens einem elastischen Halteelement (40) an einem Arbeitskopf (42) einer Betätigungseinrichtung (6) gehalten ist, wobei der Saugkopf (4) einen elastischen Saugnapf (8) aufweist, der einen Saugkörper (10) und eine einen offenen Randbereich des Saugkörpers (10) bildende, in einer Saugebene (14) verlaufende Sauglippe (12) besitzt, **dadurch gekennzeichnet, dass** der Saugkopf (4) eine mit dem Saugnapf (8) verbundene und diesen ringförmig umschließende Halteplatte (20) aufweist, die eine ebene, in einer zu der Saugebene (14) parallelen Kontaktebene (28) verlaufende Kontaktfläche (26) aufweist.

2. Sauggreifvorrichtung nach Anspruch 1, **dadurch gekennzeichnet, dass** die Saugebene (14) und die Kontaktebene (28) senkrecht zu einer Saugrichtung (15) des Saugkopfs (4) verlaufen, die entlang einer Längsachse (4a) des Saugkopfs (4) gerichtet ist.

3. Sauggreifvorrichtung nach Anspruch 1 oder 2, **dadurch gekennzeichnet, dass** die Sauglippe (12) in einem drucklosen Ruhezustand des Saugnapfs (8) in der Kontaktebene (28) liegt oder entgegen der Saugrichtung (15) über diese vorsteht.

4. Sauggreifvorrichtung nach einem der vorangehenden Ansprüche, **dadurch gekennzeichnet, dass** die Sauglippe (12) kreisrund oder oval ist und die Halteplatte (20) eine kreisförmige oder ovale Öffnung (22) aufweist, deren Durchmesser oder Größe gleich oder größer als ein Außendurchmesser der Sauglippe (12) ist.

5. Sauggreifvorrichtung nach einem der vorangehenden Ansprüche, **dadurch gekennzeichnet, dass** der Saugkörper (10) an einem der Sauglippe (12) gegenüberliegenden Ende mit einem Anschlussteil (16) verbunden ist, das an der Halteplatte (20) fixiert ist.

6. Sauggreifvorrichtung nach einem der vorangehenden Ansprüche, **dadurch gekennzeichnet, dass** die Halteplatte (20) im Bereich der Kontaktfläche (26) aus einem Material besteht oder in diesem Bereich mit einem Material beschichtet ist, das einen hohen Reibwert aufweist, insbesondere Gummi.

7. Sauggreifvorrichtung nach einem der vorangehenden Ansprüche, **dadurch gekennzeichnet, dass** der Saugkopf (4) mit mehreren elastischen Halteelementen (40) an dem Arbeitskopf (42) der Betätigungseinrichtung (6) gehalten ist, wobei ein erstes Ende eines jeden Halteelements (40) mit dem Saugkopf (4) und ein zweites Ende eines jeden Halteelements (40) mit dem Arbeitskopf (42) verbunden ist.

8. Sauggreifvorrichtung nach Anspruch 7, **dadurch gekennzeichnet, dass** die Halteelemente (40) Spiralfedern sind.

9. Sauggreifvorrichtung nach Anspruch 8, **dadurch gekennzeichnet, dass** drei Halteelemente (40) in Form von Spiralfedern vorgesehen sind, deren erste Enden an Punkten eines gleichseitigen Dreiecks an der Halteplatte (20) angeordnet sind.

10. Sauggreifvorrichtung nach Anspruch 8 oder 9, **dadurch gekennzeichnet, dass** zweite Enden der Spiralfedern an Eckpunkten eines gleichseitigen Dreiecks an dem Arbeitskopf (42) angeordnet sind.

11. Sauggreifvorrichtung nach Anspruch 9 oder 10, **dadurch gekennzeichnet, dass** die ersten Enden der Spiralfedern (40) von der Halteplatte (20) divergierend abgehen, und dass die zweiten Enden der Spiralfedern (40) von dem Arbeitskopf (42) divergierend abgehen.

12. Sauggreifvorrichtung nach einem der vorangehenden Ansprüche, **dadurch gekennzeichnet, dass** der Saugkopf (4) durch ein nicht dehnbares Zugglied (60) mit dem Arbeitskopf (42) verbunden ist.

13. Sauggreifvorrichtung nach einem der vorangehenden Ansprüche, **dadurch gekennzeichnet, dass** der Saugkörper (10) des Saugnapfs (8) abwechselnd konvergierend und divergierend angeordnete hohlkegelstumpfförmige Abschnitte aufweist.

14. Sauggreifvorrichtung nach einem der vorangehenden Ansprüche, **dadurch gekennzeichnet, dass** ein Saugkopf (4) oder eine Anzahl benachbarter Saugköpfe (4) an einer oder einer gemeinsamen Betätigungseinrichtung angebracht sind.

15. Sauggreifvorrichtung nach Anspruch 14, **dadurch gekennzeichnet, dass** die Betätigungseinrichtung (6) eine pneumatisch betätigte Kolben-/Zylindereinheit (70) umfasst, die mit einem von einer Ausfahrstellung unabhängigen, konstanten, auf einen vorgegebenen Wert beschränkbaren Druck beaufschlagbar ist.

16. Sauggreifvorrichtung nach einem der vorangehenden Ansprüche, **dadurch gekennzeichnet, dass** eine oder mehrere benachbarte weitere Sauggreifvorrichtungen (2) mit jeweiligen Saugköpfen (4) und Betätigungseinrichtungen (6) vorgesehen sind, wobei alle Betätigungseinrichtungen (6) an einem gemeinsamen Greiferrahmen (92) angeordnet sind.

17. Sauggreifvorrichtung nach einem der vorangehenden Ansprüche, **dadurch gekennzeichnet, dass** der Saugnapf (8) passiv wirkend ausgebildet ist oder mit einer Unterdruckquelle gesteuert verbindbar ist.

## Claims

1. Vacuum gripper device (2) with suction head (4), which is mounted with at least one elastic mounting member (40) on a working head (42) of an actuating means (6), the suction head (4) having an elastic suction cup (8), which possesses a suction body (10) and a suction lip (12) forming an open edge portion of the suction body (10) and running in a suction plane (14), **characterized in that** the suction head (4) possesses a retaining plate (20) connected to the suction cup (8) and surrounding it like a ring and having a flat contact surface (26) running in a contact plane (28) parallel to the suction plane (14).

2. Vacuum gripper device according to claim 1, **characterized in that** the suction plane (14) and the contact plane (28) run perpendicularly to a suction direction (15) of the suction head (4), which is aligned along a longitudinal axis (4a) of the suction head (4).

3. Vacuum gripper device according to claim 1 or 2, **characterized in that** in a non-pressurised rest state of the suction cup (8), the suction lip (12) lies in the contact plane (28) or projects above it opposite the suction direction (15).

4. Vacuum gripper device according to any one of the above claims, **characterized in that** the suction lip (12) is circular or oval and the retaining plate (20) has a circular or oval opening (22), the diameter or size of which is the same or greater than an outer diameter of the suction lip (12).

5. Vacuum gripper device according to any one of the above claims, **characterized in that** the suction body (10) is attached at an end opposite the suction lip (12) to a connector part (16), which is fixed to the retaining plate (20).

6. Vacuum gripper device according to any one of the above claims, **characterized in that** in the region of the contact surface (26) the retaining plate (20) consists of a material or is coated **in that** region with a material, which has a high coefficient of friction, especially rubber.

7. Vacuum gripper device according to any one of the above claims, **characterized in that** the suction head (4) is mounted on the working head (42) of the actuating means (6) with a plurality of elastic mounting members (40), with a first end of each mounting member (40) being connected to the suction head (4) and a second end of each mounting member (40) being connected to the working head (42).

8. Vacuum gripper device according to claim 7, **characterized in that** the mounting members (40) are coil springs.

9. Vacuum gripper device according to claim 8, **characterized in that** three mounting members (40) in the form of coil springs are provided, the first ends of which are located at points of an equilateral triangle at the retaining plate (20).

10. Vacuum gripper device according to claim 8 or 9, **characterized in that** second ends of the coil springs are located at corners of an equilateral triangle at the working head (42).

11. Vacuum gripper device according to claim 9 or 10, **characterized in that** the first ends of the coil springs (40) diverge away from the retaining plate (20), and that the second ends of the coil springs (40) diverge away from the working head (42).

12. Vacuum gripper device according to any one of the above claims, **characterized in that** the suction head (4) is connected to the working head (42) by a non-expandable tension member (60).

13. Vacuum gripper device according to any one of the above claims, **characterized in that** the suction body (10) of the suction cup (8) has alternately converging and diverging frustoconical portions.

14. Vacuum gripper device according to any one of the above claims, **characterized in that** a suction head (4) or a number of adjacent suction heads (4) are attached to one or a common actuating means.

15. Vacuum gripper device according to claim 14, **characterized in that** the actuating means (6) comprises a pneumatically operated piston/cylinder unit (70), to which a constant pressure, which can be limited to a predetermined value, is applied independently of any extended position.

16. Vacuum gripper device according to any one of the above claims, **characterized in that** one or more adjacent further vacuum gripper devices (2) with respective suction heads (4) and actuating means (6) are provided, wherein all the actuating means (6) are disposed on a common gripper frame (92).

17. Vacuum gripper device according to any one of the above claims, **characterized in that** the suction cup (8) is configured to act passively or can be connected in a controlled manner to a vacuum source.

## Revendications

1. Dispositif préhenseur à ventouse (2) avec tête d'aspiration (4), qui est monté avec au moins un élément de montage élastique (40) sur une tête de travail (42) d'un moyen d'actionnement (6), la tête d'aspiration (4) ayant une ventouse élastique (8), qui possède un corps d'aspiration (10) et une lèvre d'aspiration (12) formant une partie bord ouvert du corps d'aspiration (10) et fonctionnant dans un plan d'aspiration (14), **caractérisé en ce que** la tête d'aspiration (4) possède une plaque de retenue (20) rattachée à la ventouse (8) et l'entourant comme un anneau et ayant une surface de contact plate (26) fonctionnant dans un plan de contact (28) parallèle au plan d'aspiration (14)

2. Dispositif préhenseur à ventouse selon la revendication 1, **caractérisé en ce que** le plan d'aspiration (14) et le plan de contact (28) sont perpendiculaires à une direction d'aspiration (15) de la tête d'aspiration (4), qui est alignée le long d'un axe longitudinal (4a) de la tête d'aspiration (4).

3. Dispositif préhenseur à ventouse selon la revendication 1 ou 2, **caractérisé en ce que**, dans un état non pressurisé de la ventouse (8), la lèvre d'aspiration (12) se trouve dans le plan de contact (28) ou fait saillie au-dessus de celui-ci, dans une direction opposée à la direction d'aspiration (15).

4. Dispositif préhenseur à ventouse selon l'une quelconque des revendications précédentes, **caractérisé en ce que** la lèvre d'aspiration (12) est circulaire ou ovale et la plaque de retenue (20) a une ouverture circulaire ou ovale (22), dont la taille ou le diamètre est le même ou plus grand qu'un diamètre extérieur de la lèvre d'aspiration (12).

5. Dispositif préhenseur à ventouse selon l'une quelconque des revendications précédentes, **caractérisé en ce que** le corps d'aspiration (10) est attaché, à une extrémité opposée à la lèvre d'aspiration (12), à une pièce de raccordement (16), qui est fixée à la plaque de retenue (20).

6. Dispositif préhenseur à ventouse selon l'une quelconque des revendications précédentes, **caractérisé en ce que**, dans la région de la surface de contact (26), la plaque de retenue (20) consiste en un matériau ou est revêtue, dans cette région, d'un matériau qui a un coefficient de frottement élevé, particulièrement du caoutchouc.

7. Dispositif préhenseur à ventouse selon l'une quelconque des revendications précédentes, **caractérisé en ce que** la tête d'aspiration (4) est montée sur la tête de travail (42) du moyen d'actionnement (6) avec une pluralité d'éléments de montage élastique (40), une première extrémité de chaque élément de montage (40) étant rattachée à la tête d'aspiration (4) et une deuxième extrémité de chaque élément de montage (40) étant rattachée à la tête de travail (42).

8. Dispositif préhenseur à ventouse selon la revendication 7, **caractérisé en ce que** les éléments de montage (40) sont des ressorts hélicoïdaux.

9. Dispositif préhenseur à ventouse selon la revendication 8, **caractérisé en ce que** trois éléments de montage (40) sous la forme de ressorts hélicoïdaux sont prévus, dont les premières extrémités sont situées aux pointes d'un triangle équilatéral au niveau de la plaque de retenue (20)

10. Dispositif préhenseur à ventouse selon la revendication 8 ou 9, **caractérisé en ce que** les deuxièmes extrémités des ressorts hélicoïdaux sont situées aux coins d'un triangle équilatéral au niveau de la tête de travail (42).

11. Dispositif préhenseur à ventouse selon la revendication 9 ou 10, **caractérisé en ce que** les premières extrémités des ressorts hélicoïdaux (40) divergent de la plaque de retenue (20), et **en ce que** les deuxièmes extrémités des ressorts hélicoïdaux (40) divergent de la tête de travail (42).

12. Dispositif préhenseur à ventouse selon l'une quelconque des revendications précédentes, **caractérisé en ce que** la tête d'aspiration (4) est rattachée à la tête de travail (42) par un élément de tension non extensible (60).

13. Dispositif préhenseur à ventouse selon l'une quelconque des revendications précédentes, **caractérisé en ce que** le corps d'aspiration (10) de la ventouse (8) a des parties frustoconiques convergentes et divergentes de façon alternée.

14. Dispositif préhenseur à ventouse selon l'une quelconque des revendications précédentes, **caractérisé en ce qu'**une tête d'aspiration (4) ou un certain nombre de têtes d'aspiration adjacentes (4) sont attachées à un seul ou à un moyen d'actionnement commun

15. Dispositif préhenseur à ventouse selon la revendication 14, **caractérisé en ce que** le moyen d'actionnement (6) comporte une unité piston/cylindre commandée pneumatiquement (70), sur laquelle une pression constante, qui peut être limitée à une valeur prédéterminée, est appliquée indépendamment de toute position sortie.

16. Dispositif préhenseur à ventouse selon l'une quelconque des revendications précédentes, **caractérisé en ce qu'**un ou plusieurs dispositifs préhenseurs à ventouse (2) avec des têtes d'aspiration (4) et des moyens d'actionnement (6) respectifs sont prévus, tous les moyens d'actionnement (6) étant disposés sur un bâti de préhenseurs commun (92).

17. Dispositif préhenseur à ventouse selon l'une quelconque des revendications précédentes, **caractérisé en ce que** la ventouse (8) est configurée de façon à agir passivement ou peut être raccordée d'une manière contrôlée à une source de vide.
